# EUROPÄISCHE PATENTSCHRIFT

(11) **EP 0 707 798 B1**
(45) Veröffentlichungstag und Bekanntmachung des Hinweises auf die Patenterteilung: **04.12.2002**
(21) Anmeldenummer: 94116561.5
(22) Anmeldetag: 20.10.1994
(51) Int. Cl.: A23K 1/00

(54) **Verfahren zur Herstellung von Futtermitteln, die pharmakologisch wirksame Substanzen enthalten**
Method for preparing feedstuffs containing pharmacologically active substances
Procédé de préparation de nourritures pour animaux contenant des substances pharmacologiquement actives

(43) Veröffentlichungstag der Anmeldung: 24.04.1996
(73) Patentinhaber: Chevita Tierarzneimittel-Gesellschaft mit beschränkter Haftung, 85276 Pfaffenhofen/Ilm (DE)
(72) Erfinder: Abele, Ulf, Dr., D-80804 München (DE)
(74) Vertreter: Mattusch, Gundula

(56) Entgegenhaltungen:
- EP-A- 0 231 817
- EP-A- 0 241 441
- EP-A- 0 293 070
- WO-A-93/04670
- CH-A- 680 896
- DE-A- 1 667 793
- DE-A- 2 437 780
- US-A- 3 639 637
- DATABASE WPI Week 8816, Derwent Publications Ltd., London, GB; AN 88-109744 & JP-A-63 059 378 (KITTY KK) 15. März 1988
- PATENT ABSTRACTS OF JAPAN vol. 8, no. 162 (C-235) 26. Juli 1984 & JP-A-59 063 147 (MARIN PROJECT:KK) 10. April 1984
- Food Colloids, Ed. H.D. Graham, S. 393 - 395, 1977, The AVI PUBLISHING COMPANY, WESTPORT, CONNETICUT

## Beschreibung

Die Erfindung betrifft ein Verfahren zur Herstellung von Fütterungsarzneimittel darstellenden Futtermitteln, die pharmakologisch wirksame Substanzen enthalten, und von Futtermitteln, die pharmakologisch wirksame Futtermittelzusatzstoffe, nämlich Prophylaktika, antibiotische und nicht-antibiotische Leistungsförderer, Antibiotika und/oder Chemotherapeutika zur Leistungssteigerung sowie zur Verhütung der Histomoniasis und Kokzidiose, enthalten, sowie die Verwendung einer Vormischung zur Herstellung von Fütterungsarzneimittel darstellenden Futtermitteln.

Fütterungsarzneimittel werden hergestellt, indem man einem Futtermittel eine Arzneimittelvormischung hinzumischt.

Futtermittelzusatzstoffe mit pharmakologischer Wirkung werden gemäß ihrem gesetzlich vorgeschriebenen Verwendungszweck in Futtermittel (Allein- oder Ergänzungsfuttermittel) eingemischt.

Die Wirkstoffanteile in der Futtermittelmischung sind recht unterschiedlich und können zwischen 5 bis 5000 ppm liegen. Spezielle Chargen von Fütterungsarzneimitteln und Futtermitteln mit Futtermittelzusatzstoffen mit pharmakologischer Wirkung enthalten in Abhängigkeit von dem zu verabreichenden Wirkstoff genau definierte Wirkstoffkonzentrationen.

Bekannt ist es, Fütterungsarzneimittel und Futtermittel mit Futtermittelzusatzstoffen dadurch herzustellen, daß auf rein mechanischem Weg der Futtermittelmischung der zu verabreichende Wirkstoff als pulverförmige Vormischung in einem diskontinuierlichen (Batch-) Verfahren zugemischt wird. Als Futtermittelzusatzstoffe, die in Pulverform zugemischt werden, finden insbesondere Enzyme, Aromastoffe, Vitamine, Probiotika, Leistungsförderer und krankheitsverhütende Zusatzstoffe Anwendung. Bei einer Zumischung auf rein mechanischem Wege kommt es durch die verschiedenen Misch-, Förder-, Produktions-, Kühlund Lagereinrichtungen zu zum Teil beträchtlichen Wirkstoffverschleppungen in nachfolgende Futtermittelchargen. Diese verschleppten Wirkstoffe verunreinigen die Folgechargen und können unerwünschte Wechselwirkungen zwischen den pharmakologischen Bestandteilen der jeweiligen Chargen zur Folge haben. Ein Verfüttern dieser verunreinigten Futtermittel birgt die Gefahr erheblicher Rückstandsprobleme bei der Produktion tierischer Lebensmittel. Als besonders nachteilig bei den aus dem Stand der Technik bekannten Vermisch- und Einmischverfahren wird das möglicherweise auftretende allergene Potential der verwendeten Wirkstoffe, insbesondere auf das beschäftigte Personal angesehen, da diese Wirkstoffe auch in Form von Stäuben in die Atemluft und auf die Haut gelangen können.

Bekannt ist es auch, daß Fütterungsarzneimittel und Futtermittel mit pharmakologisch wirksamen Futtermittelzusatzstoffen nach ihrer Herstellung durch pulverförmiges Mischen in der Regel pelletiert, expandiert oder extrudiert werden. Bei diesen weiteren Produktionsschritten und Aufschlußverfahren kommt es zu erheblichen Belastungen der Wirkstoffe durch Wasserdampfkonditionierung, erhöhte Drücke und Temperaturen, die zum Teil weit über 100 °C liegen. Diese Belastungen können entweder unmittelbar die Wirkstoffgehalte mindern oder aber die Wirkstoffstabilität während der Lagerung erheblich beeinträchtigen.

Aus der EP 0 231 817 B1 sind ein Verfahren und eine Anlage bekannt, welche das Aufbringen von Vitaminen, Enzymen und Medikamenten - diese Stoffe werden unter dem Begriff "gesundheitsfördernde Mittel" zusammengefaßt - auf Formlinge beschreibt. Diese Formlinge können sowohl der Ernährung des Menschen, als auch der Ernährung von Tieren dienen und werden, zum verlustarmen und kostengünstigen Aufbringen der gesundheitsfördernden Mittel in einer diese Mittel enthaltenden Umgebung gewälzt, und zwar trocken, so daß die Oberfläche der Formlinge ziemlich gleichmäßig mit dem diese Mittel enthaltenden Pulver bedeckt wird. Vorteilhafterweise hängt dadurch die Zugabemenge des gesundheitsfördernden Mittels lediglich von der Größe oder Oberfläche des Formlings, der Wikstoffkonzentration des Mittels im Pulver und der Wälzdauer des Formlings ab. Beim Wälzen der Formlinge in einer das Mittel in Lösung oder Suspension enthaltenden Umgebung wären die Adhäsionskräfte der Flüssigkeit einem verlustfreien Auftragen nachteiligerweise abträglich. Die in dem das Mittel enthaltenden Pulver gewälzten Formlinge werden abschließend beispielsweise mit Fett besprüht, so daß sich das Pulver als eine Art Drageeschicht um den Formling herumlegt.

Aus der EP 0 241 441 ist es bekannt, biologisch aktives Material, wie beispielsweise Enzyme, Hormone, Vitamine, lebende Bakterien oder zumindest Teile davon, in Mischungen, Suspensionen oder Lösungen einzubringen und die Oberfläche von Basismaterialien mit einem Überzug aus dieser Suspension oder Lösung zu überziehen oder zu beschichten. So werden beispielsweise Suspensionen, welche Enzyme oder Probiotika enthalten, auf pelletierte oder extrudierte Futtermittel unter Verwendung einer Membranpumpe aufgesprüht.

In der US-A 3 639 637 wird eine Trockenmischung beschrieben, die fein verteiltes Dyethylstilbestrol und mikrokristalline Zellulose enthält, bei der es sich um ein in Wasser dispergierbares organisches Hydrokolloid handelt.

Diese bekannte Trockenmischung wird vom Endverbraucher und somit beispielsweise von einem Landwirt unter Bildung eines Gels vermischt, das dann mit einem Tierfutter vermischt oder auf ein Tierfutter gesprüht wird.

Die Bildung eines homogenen wässrigen Gels wird in der WO-A 9 304 670 beschrieben. Dieses Gel wird auf ein an einem Menschen oral zu verabreichendes Arzneimittel aufgebracht und erleichtert das Schlucken dieses Arzneimittels.

Ausgehend von diesem Stand der Technik ist es die Aufgabe der vorliegenden Erfindung, ein Verfahren zur Herstellung von Futtermitteln, die pharmakologisch wirksame Substanzen enthalten, und von Futtermitteln mit pharmakologisch wirksamen Futtermittelzusatzstoffen bzw. eine Vormischung in geeigneter galenischer Zubereitung bereitzustellen, welche eine homogene Wirkstoffverteilung, Wirkstoffstabilität im Futtermittel und Bioverfügbarkeit aus diesem garantiert, welche ohne in den Futtermittelförder- und -Produktionsanlagen Rückstände zu hinterlassen, dem Futtermittel zugeführt werden kann und welche ohne ein Freisetzen von wirkstoffhaltigen Substanzen in die Umwelt auf das Futtermittel aufgebracht werden kann.

Gelöst wird diese Aufgabe durch ein Verfahren gemäß der Lehre des Anspruchs 1 und durch die Verwendung gemäß der Lehre des Anspruches 4.

Bei dem erfindungsgemäßen Verfahren werden die pharmakologisch wirksamen Substanzen/Futtermittelzusatzstoffe einzeln oder als Mischung in Form eines Gels eingesetzt und in dieser Form auf ein physikalisch fertiggestelltes Futtermittel, welches den mechanischen Misch,-Forder- und Produktionweg durchlaufen hat, abschließend aufgesprüht.

Fütterungsarzneimittel im Zusammenhang mit dem erfindungsgemäßen Verfahren sind insbesondere Futtermittel, die Arzneimittelvormischungen mit pharmakologisch wirksamen Substanzen enthalten und beim Tier zu therapeutischen, prophylaktischen und metaphylaktischen Zwecken eingesetzt werden.

Als Futtermittel mit pharmakologisch wirksamen Futtermittelzusatzstoffen im Zusammenhang mit dem erfindungsgemäßen Verfahren sind Futtermittel anzusehen, die Zusatzstoffvormischungen mit pharmakologisch wirksamen Substanzen zur antibiotischen und nicht antibiotischen Leistungsförderung Antibiotika und Chemotherapeutika zur Leistungssteigerung und pharmakologisch wirksame Substanzen zur Verhütung der Histomoniasis und der Kokzidiose enthalten.

Als physikalisch fertiggestellte Futtermittel im Zusammenhang mit dem erfindungsgemäßen Verfahren sind abschließend fertige Futtermittel, also insbesondere pulverförmige, gekörnte, granulierte, pelletierte, expandierte oder extrudierte Futtermittel anzusehen.

Die pharmakologisch wirksamen Substanzen werden als Arzneimittelvormischung oder -zubereitung und /oder Futtermittelzusatzstoffe in gelförmiger Zubereitung als fließfähiges Gel auf das fertiggestellte Futtermittel aufgesprüht. Das Aufsprühen der Zubereitungen erfolgt, nachdem das Futtermittel den mechanischen Misch-, Förder- und Produktionsweg durchlaufen hat. Die pharmakologisch wirksamen Substanzen werden als versprühfähiges Gel abschließend auf die physikalisch fertigen Futtermittel aufgebracht.

Pharmakologisch wirksame Substanzen, die in gelartiger Formulierung auf die Futtermittel aufgesprüht werden, sind therapeutisch und/oder prophylaktisch wirksame Substanzen, wie Antibiotika und Chemotherapeutika, im Sinne der Arzneimittelgesetzgebung oder pharmakologisch wirksame Zusatzstoffe aus der Anlage 3 der futtermittelrechtlichen Vorschriften, dort insbesondere Punkt 1 "Leistungsförderer" und Punkt 7 "Zusatzstofffe zur Verhütung der Histomoniasis und der Kokzidiose"; Enzyme, Vitamine, Probiotika, Aromastoffe und Impfstoffe sind davon ausdrücklich ausgenommen. Die pharmakologisch wirksamen Substanzen werden als Vormischung in galenischer Zubereitung zur Herstellung von Fütterungsarzneimitteln und von Futtermitteln mit Zusatzstoffen als fließfähiges Gel formuliert. Die galenische Zubereitung der Vormischung erfolgt als Suspensionsgel oder als Emulsionsgel. Diese Gelformulierungen sind als versprühfähiges Gel eingestellt und enthalten mindestens einen fluiden Träger, der mit der oder den pharmakologisch wirksamen Substanzen eine flüssige oder halbflüssige Formulierung bildet.

Als flüssige oder halbflüssige Formulierungen im Zusammenhang mit den erfindungsgemäßen Vormischungszubereitungen sind insbesondere Lösungen, Suspensionen, Dispersionen und Emulsionen anzusehen.

Vormischungen die als Gel formuliert sind, sind fließfähige und versprühfähige Gele, z.B. Suspensionen, Dispersionen und Emulsionen, insbesondere wässrige Gele, wässrig-propandiolische Gele, propandiolische Gele, Gele aus Wasser-/Glycerin, aus Glycerin, nichtwässrige Gele und Oleogele. Zubereitungen von Vormischungen in Gelformulierung werden insbesondere dort angewandt, wo es erforderlich ist, die pharmakologisch wirksamen Substanzen in chemisch stabiler und homogener Verteilung zu halten.

Die Vormischungen enthalten mindestens eine pharmakologisch wirksame Substanz. Diese pharmakologisch wirksame Substanz kann dabei als Arzneimittelvormischung, als Zusatzstoffvormischung, als Mischung von mehreren Arzneimittelvormischungen bzw. als Mischung von mehreren Zusatzstoffvormischungen und als Mischung aus Arzneimittelvormischung und Zusatzstoffvormischung zubereitet werden.

Alle diese vorab beschriebenen Vormischungen sind als gelförmige Zubereitung formuliert. Als gelförmige Zubereitungen finden insbesondere Suspensionsgele und Emulsionsgele die Anwendung.

Die Erfindung soll nachfolgend an drei Ausführungsbeispielen näher erläutert werden.

### Ausführungsbeispiel 1:

Beschrieben wird eine Arzneimittelvormischung, formuliert als propandiolisches Gel, in Form eines sprühfähigen Gels zur Herstellung eines Fütterungsarzneimittels.

Zur Herstellung von 100 g dieser Arzneimittelvormischung wird kolloidales Siliciumdioxid in 88,0 g 1,2-Propandiol dispergiert und anschließend in diese Mischung 10,0 g Tiamulinhydrogenfumarat mit dem Dipergator bis zur gleichmäßigen Verteilung eingearbeitet. Man erhält so ein biologisch, chemisch und physikalisch stabiles Gel, das auf ein physikalisch fertiggestelltes Futtermittel (z.B. pelletiertes Futter für Ferkel) aufgesprüht werden kann und auf diesem Futtermittel gut haftet.

### Ausführungbeispiel 2:

Beschrieben wird die Herstellung eines nicht antibiotisch wirksamen Leistungsförderers in der Formulierung als wässrig/propandiolisches Suspensionsgel.

Unter Dispergieren von 1 g Xanthan und 45 ml 1,2-Propandiol in einer entsprechenden Menge Wasser wird ein propandiolisch-wäßriges Suspensionsgel zubereitet, dem 10 g Olaquindox und 0,3 g Zitronensäure zugesetzt werden. Nach mehrfachem Rühren zur homogenen Verteilung der pharmakologisch wirksamen Substanz im Gel und Auffüllen mit Wasser auf 100 ml, wird ein sprühfähiges Suspensionsgel erhalten, welches als Futtermittelzusatzstoff auf ein physikalisch fertiggestelltes Futtermittel aufgesprüht werden kann.

### Ausführungsbeispiel 3:

Beschrieben wird die Formulierung eines Futtermittelzusatzstoffes zur Verhütung der Kokzidiose, in der Zubereitung als Oleogel. Dieser Zusatzstoff kann ebenso als antibiotisch wirksamer Leistungsförderer auf ein Futtermittel aufgebracht werden.

Hierzu werden 2,5 g kolloidales Siliciumdioxid mit einer entsprechenden Menge Erdnußöl dispergiert, anschließend werden in dieses wasserfreie Suspensions-Oleogel 20 g Monensin-Natrium eingerührt. Das so gebildete Suspensions-Oleogel ist nach Auffüllen mit Erdnußöl auf 100 ml, ein sprühfähige Gelzubereitung, welche auf Futtermittel aufgesprüht werden kann.

## Patentansprüche

1. Verfahren zur Herstellung von Fütterungsarzneimittel darstellenden Futtermitteln, die pharmakologisch wirksame Substanzen enthalten, und von Futtermitteln, die pharmakologisch wirksame Futtermittelzusatzstoffe, nämlich Prophylaktika, antibiotische und nicht-antibiotische Leistungsförderer, Antibiotika und/oder Chemotherapeutika zur Leistungssteigerung sowie zur Verhütung der Histomoniasis und Kokzidiose, enthalten, in einer Futtermittelproduktionsanlage,
**dadurch gekennzeichnet, dass** die pharmakologisch wirksamen Substanzen/Futtermittelzusatzstoffe einzeln oder als Mischung in Form eines fließfähigen Gels eingesetzt und in dieser Form auf ein physikalich fertiggestelltes Futtermittel, welches den mechanischen Misch-, Förder- und Produktionweg durchlaufen hat, in deiser Futtermittelproduktionanlage abschließend aufgesprüht werden.

2. Verfahren nach Anspruch 1,
**dadurch gekennzeichnet,**
**dass** das fließfähige Gel in Form eines Suspensionsgels aufgesprüht wird.

3. Verfahren nach Anspruch 1,
**dadurch gekennzeichnet,**
**dass** das fließfähige Gel in Form eines Emulsionsgels aufgesprüht wird.

4. Verwendung von
a) Vormischungen, die pharmakologisch wirksame Substanzen enthalten, zur Herstellung von Fütterungsarzneimittel darstellenden, derartige Substanzen enthaltenden Futtermitteln, und von
b) Vormischungen, die pharmakologisch wirksame Futtermittelzusatzstoffe, nämlich Prophylaktika, antibiotische und nicht-antibiotische Leistungsförderer, Antibiotika und/oder Chemotherapeutika zur Leistungssteigerung sowie zur Verhütung der Histomoniasis und Kokzidiose, enthalten, zur Herstellung von derartige Futtermittelzusatzstoffe enthaltenden Futtermitteln, **dadurch gekennzeichnet, dass** die pharmakologisch wirksamen Substanzen/Futtermittelzusatzstoffe einzeln oder als Mischung in Form eines fließfähigen Gels eingesetzt und in dieser Form auf ein physikalisch fertiggestelltes Futtermittel, welches den mechanischen Misch-, Förder - und Produktionsweg durchlaufen hat, in dieser Futtermittelproduktionanlage abschließend aufgesprüht werden.

5. Verwendung nach Anspruch 4,
**dadurch gekennzeichnet,**
**dass** es sich bei dem fließfähigen Gel um ein Suspensionsgel handelt.

6. Verwendung nach Anspruch 4,
**dadurch gekennzeichnet,**
**dass** es sich bei dem fließfähigen Gel um ein Emulsionsgel handelt.

## Claims

1. Process for the production of fodders, which are fodder medicines and contain pharmacologically active substances, and of fodders, which contain pharmacologically active fodder additives, namely prophylactics, antibiotic and non-antibiotic performance enhancers, antibiotics and/or chemotherapeutic agents for the performance enhancement as well as for the prevention of the histomoniasis and the coccidiosis, in a fodder production plant,
**characterized in that**
the pharmacologically active substances/fodder additives are used alone or as a mixture in form of a flowable gel and are finally sprayed in this form in said fodder production plant onto a physically finished fodder which has passed through the mechanical mixing, conveying and production course.

2. Process according to claim 1,
**characterized in that**
the flowable gel is sprayed on in the form of a suspension gel.

3. Process according to claim 1,
**characterized in that**
the flowable gel is sprayed on in the form of an emulsion gel.

4. Use of
a) pre-mixtures, which contain pharmacologically active substances, for the production of fodders, which are fodder medicines and contain said substances, and of
b) pre-mixtures, which contain pharmacologically active fodder additives, namely prophylactics, antibiotic and non-antibiotic performance enhancers, antibiotics and/or chemotherapeutic agents for the performance enhancement as well as for the prevention of the histomoniasis and the coccidiosis, for the production of fodders containing such fodder additives,
**characterized in that**
the pharmacologically active substances/fodder additives are used individually or as a mixture in the form of a flowable gel and are finally sprayed in this form in said fodder production plant onto a physically finished fodder which has passed through the mechanical mixing, conveying and production course.

5. Use according to claim 4,
**characterized in that**
the flowable gel is a suspension gel.

6. Use according to claim 4,
**characterized in that**
the flowable gel is an emulsion gel.

## Revendications

1. Procédé de préparation de nourritures pour animaux, représentant une nourriture médicamenteuse, qui contiennent des substances pharmacologiquement efficaces, et de nourritures pour animaux qui contiennent des additifs alimentaires pharmacologiquement efficaces, à savoir des prophylactiques, des agents antibiotiques et non antibiotiques favorisant la performance, des antibiotiques et/ou des agents chimiothérapeutiques destinés à augmenter la performance et à prévenir l'histomonose et la coccidiose, dans une installation de production de nourritures pour animaux,
**caractérisé en ce que** les substances / additifs alimentaires efficaces sur le plan pharmacologique sont utilisés seuls ou en tant que mélange sous la forme d'un gel coulant et sont ensuite pulvérisés sous cette forme, dans cette installation de production de nourritures pour animaux, sur une nourriture physiquement achevée, qui a passé le processus mécanique de mélange, de transport et de production.

2. Procédé selon la revendication 1, **caractérisé en ce que** le gel coulant est pulvérisé sous la forme d'un gel en suspension.

3. Procédé selon la revendication 1, **caractérisé en ce que** le gel coulant est pulvérisé sous la forme d'un gel en émulsion.

4. Utilisation de
a) prémélanges, qui contiennent des substances actives sur le plan pharmacologique, pour préparer des nourritures pour animaux représentant des nourritures médicamenteuses et contenant de telles substances, et de
b) prémélanges qui contiennent des additifs alimentaires efficaces sur le plan pharmacologique, à savoir des prophylactiques, des agents antibiotiques et non antibiotiques favorisant la performance, des antibiotiques et/ou des agents chimiothérapeutiques destinés à améliorer la performance et à prévenir l'histomonose et la coccidiose, afin de préparer des nourritures pour animaux contenant de tels additifs alimentaires, **caractérisée en ce que** les substances / additifs alimentaires efficaces sur le plan pharmacologique sont utilisés seuls ou en tant que mélange sous la forme d'un gel coulant et sont ensuite pulvérisées sous cette forme, dans cette installation de production, sur une nourriture physiquement achevée qui a passé le processus mécanique de mélange, de transport et de production.

5. Utilisation selon la revendication 4, **caractérisé en ce qu'**il s'agit, concernant le gel coulant, d'un gel en suspension.

6. Utilisation selon la revendication 4, **caractérisé en ce qu'**il s'agit, concernant le gel coulant, d'un gel en émulsion.
